# EUROPEAN PATENT APPLICATION

(11) **EP 4 349 796 A1**
(43) Date of publication of application: **10.04.2024**
(21) Application number: 23166053.1
(22) Date of filing: 31.03.2023
(51) Int. Cl.: C04B 20/00, F27B 1/00, F27B 1/08, F27B 1/10, F27B 15/00, F27B 15/02, F27D 11/02, F27D 11/12

(54) **METHOD AND APPLIANCE FOR THERMAL PROCESSING OF NON-ORGANIC RAW MATERIAL PARTICLES AND APPLIANCE FOR ITS PERFORMANCE**

(30) Priority: 04.10.2022 IL 29708522
(71) Applicant: Tsypkin, Evgeny, 6955307 Tel Aviv - Yafo (IL)
(72) Inventor: Tsypkin, Evgeny, 6955307 Tel Aviv - Yafo (IL)
(74) Representative: Sloboshanin, Sergej

(57) **Abstract**

The invention belongs to the sphere of production of hollow light-weight non-organic fine aggregates, namely to production of hollow particles on the basis of perlite, vermiculite, and other natural and synthetic materials which may be used in chemical, oil-processing, gun, rocket, space, building and other industries including production of lightweights (lightweight aggregates) for grouting and drilling mixtures.

Thermal processing of non-organic raw material, mainly perlite, is proposed to be performed using a vertical shaft-type furnace with the active zone (1) formed by the inner cavity of the central tube (6) which has a number of heating zones along its axis and is heated by adjustable heating elements (22) installed on the outer side of the central tube (6). At the entrance of the lower part of the active zone (1), the raw material feeding unit (2) connected to the heated is installed for mixing of pre-heated starting material with pre-heated air and formation of a dust-air mixture supplied to the active zone (1). At the exit from the active zone in its upper part, the air-cooled expanded product accumulation unit (4) is installed. The walls of the central tube (6) of the active zone (1) and the raw material feeding unit (2) are electrically connected with the respective electrodes (24) and (25) which are connected to the same-name pole of the power supply source and the expanded product accumulation unit (4) is fitted with the collecting electrode (26) that is connected to the opposite pole of the power supply source.

The technical result is increasing of the yield and quality of the ready to use product with simultaneous increase of operational reliability of the furnace and increase of turnaround intervals.

## Description

The invention belongs to the sphere of production of hollow light-weight non-organic fine aggregates, namely to production of hollow particles on the basis of perlite, vermiculite, and other natural and synthetic materials which may be used in chemical, oil-processing, gun, rocket, space, building and other industries including production of lightweights (lightweight aggregates) for grouting and drilling mixtures.

Lightweight aggregates (additives) are applied in different areas of modern industry. Hollow particles or granules are one of the most required types of lightweight aggregates. Hollow particles are used both for thermal insulation and for reduction of weight of composite materials to provide them with new properties, for instance, radio transparency, as well as to enhance their electromagnetic and dielectric characteristics.

In construction-material industry, lightweight aggregates are used to provide the required values of rheological properties, hardness and strength of cement mortars and ready-to-use products. Currently, the most important challenge is to reduce weight of downhole concretes operating at pressure of 25-70 MPa.

Expanded perlite is one of the most prospective materials in terms of expenses for industrial production and high properties of ready-to-use products. Particles of expanded perlite with size of up to 1,000 µm are usually used for production of dry mixtures.

Different appliances for thermal processing of non-organic powder materials with production of hollow lightweight granules are well known in different spheres of science and technology.

A prior arrangement of a round shaft-type furnace made of pressed fibre bricks with internal heating elements attached to the fibre wall of the furnace by a ceramic bolt and a base forming the shape of a wave and a ribbon is known (CN2786137Y, 2006).

The prior arrangement of a furnace has disadvantages associated with non-uniformity of agglomeration of the processed material. Also periodical cleaning of the inner wall surfaces from agglomerated non-organic material stuck to the walls requires labour and material expenses.

An arrangement of a blind-hole shaft-type furnace for expansion of raw perlite by electrothermal radiation consisting of a steel body with a heat-proof layer and an insulating fireproof layer, a heat-resistant stainless-steel lining, an internal steel cylinder, and electrothermal source with an internal heat source, electric-heating wire in the furnace lining, a rod-type electric heating element and a thermocouple measuring the temperature which is connected to the external electronic control system installed inside the fireproof layer, and the material cutting assembly in the upper part of the furnace lining is known (CN101451786A, 2009).

The structure of the known furnace is simple and reliable but it does not protect the heating elements in the active zone from sticking of raw material particles, which promotes eventual breakdown of the furnace.

An electric furnace for expansion of glassy microbubbles consisting of the body with the expansion cylinder installed inside it with the material input in the upper part, the material output in the lower part with an outlet duct, and the heat supply element is known. The kiln is located between the furnace body and the expansion cylinder; the heat supply element is located in the upper part of the hearth and contains a resistance conductor (CN201148400Y, 2008).

The known furnace allows to prevent sticking of raw material particles to the heating elements but there is a possibility of sticking to the protective element itself in the form of the central expansion cylinder. The disadvantage is abundant sticking of raw material particles to the expansion cylinder of the active zone and necessity of continuous furnace cleaning.

An electric furnace for perlite expansion is known (CN201463500U, 2010) with its structural features allowing to reduce the amount of perlite particles sticking to the walls by changing the structure of the feeding unit which consists of the pre-heating furnace with a duct for transporting of a pre-heated material to a funnel from which the material is fed to a tampered appliance for uniform distribution of material. The electric heating element is attached to the wall of the electric perlite furnace by means of a screw-rod connection.

The prior electric furnace arrangement does not eliminate the disadvantage of perlite particles sticking at the lower levels of the active zone.

An arrangement of an open electric heating perlite furnace consisting of a cylindrical body with a supporting vertical bracket is known, the middle part of the cylindrical body is fitted with a hearthstone, the furnace body is formed by combining a number of sections of small cylindrical furnace bodies each consisting of two symmetrical semi-circular furnace body blocks; two ends of each two symmetrical semi-circular blocks are connected to each other by clamping bolts (CN201811561U, 2011).

The prior furnace arrangement has demountable structure, which simplifies cleaning and replacing burnt-out heating elements, however, the furnace structure does not solve the problem of perlite particles sticking to the walls of its active zone.

The arrangement of a top-feed furnace for thermal processing of perlite raw material is also known; it consists of a vertical boiler tube with a heating layer on the outer side of the boiler tube which is sequentially covered with a heat-proof layer, an insulation layer and a furnace cover on which the feeding unit is installed. The upper part of the boiler tube is suspended from the furnace cover by means of a rod, the lower part of the furnace body is connected with the lower part of the fire-proof layer by means of a cushion mounting; the feeding unit consists of the first feeding tube and the second feeding tube, the first and the second feeding tubes are connected to each other with possibility of rotation between the first and the second feeding tubes, the first and the second feeding tubes are installed inside the furnace cover, the first feeding tube is fixed horizontally in the upper part by means of a fixing part. (CN207407667U, 2018).

The prior furnace arrangement has a significant disadvantage involving instability of the perlite expansion process and maintaining of constant characteristics of expanded perlite.

A drip-type heating furnace for thermal processing of powder material is known; it heats a powder during its discharge, consists of the main metal body forming the channel for powder processing and a heater heating the main body from outside by radiant heat (JP6793629B2, 2020).

A significant disadvantage of the prior furnace arrangement is direct contact of the particles of heated raw material with the walls of the active zone, which inevitably leads to sticking of particles to the wall and breakdown of the furnace.

The method and the appliance for production of expanded granulate is the most close technical solution to the claimed one (patent for an invention EP3612501B1, 2020). The known method of production of expanded granules of sand-line mineral material with an expanding agent, for instance, production of granules of perlite includes feeding of pre-heated raw material into a furnace from below together with air flow and its transporting by means of a conveyor inside an essentially vertical furnace shaft through numerous heating zones located vertical to each other with each zone having at least one adjustable heating element with heating functionality; the material is heated up to critical temperature at which its particles expand in the upper part of the furnace; the expanded material is discharged out of the furnace.

To perform the known method, a roasting furnace is used which has adjustable process temperature at each level of the active zone and has the raw-material heating and feeding units as well as the product accumulation unit.

The appliance for production of expanded perlite granules of sand-line mineral material with a foaming agent consists of a vertical furnace, a conveyor section passing between the upper end and the lower end through a number of heating zones installed vertically at a distance from each other with each heating zone containing at least one heating element which may be controlled independently from each other so as to heat a material up to the critical temperature, contains at least one means of source material feeding also to the furnace shaft together with some amount of air in the lower end of the shaft, and at least one means of material heating at furnace input below the critical temperature is designed before the furnace shaft.

The disadvantage of the prior method of perlite expansion and the appliance for its performance is instability of the non-organic raw material expansion process and impossibility to provide uniform heating of particles in the active zone.

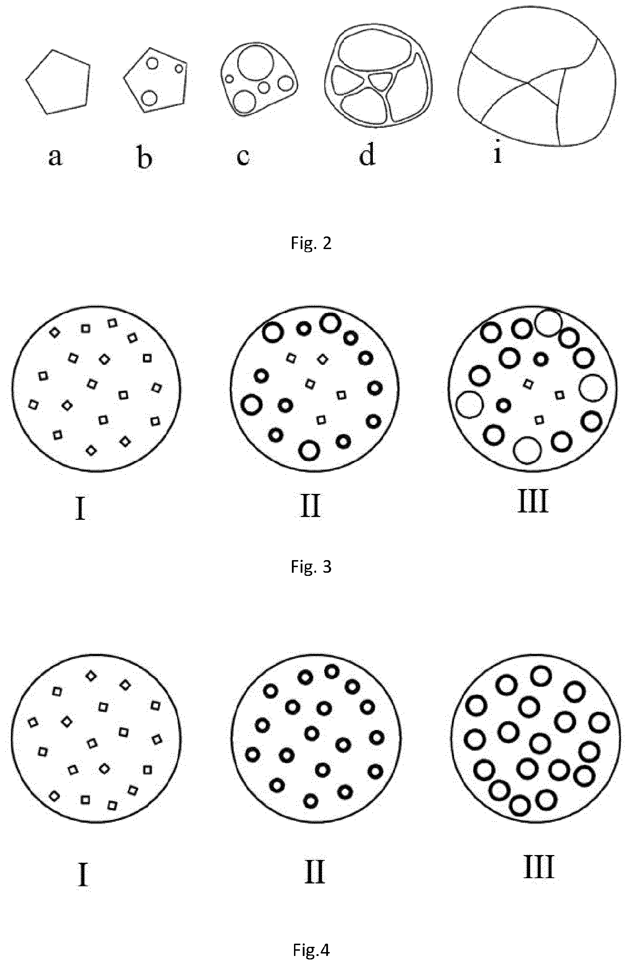

It is worth noting that the process of expansion of particles of a powder-like non-organic material consists of several stages illustrated in fig. 2.

Quantitative evaluation of the degree of particle expansion is performed using the expansion coefficient K which is calculated as the ratio of apparent density of the starting material to apparent density of the ready product particles. Products with the expansion coefficient equal to 1.8-5.0 have the best operational characteristics. Products with the expansion coefficient below 1.8 are too heavy and are not reasonable to be applied as a lightweight additive since it does not yield a result expected for high-quality lightweight additives. Products with expansion coefficient above 5.0 do not have mechanical strength and destruct by gravity and during transportation.

In any heating furnace designed for thermal processing of a powder-like non-organic raw material, all particles of the starting material are not expanded in the beginning of the process. Irrespective of the method of feeding the starting material into the furnace, i.e. from above or from below, in the beginning of passage of the starting material flow through the furnace, a part of the particles begins melting and expanding under effect of temperature. The particles located closer to a heating element expand to a larger extent while the particles located at a larger distance from a heating source expand to a lesser degree or do not expand at all. As long as the flow of particles passes along the axis of the heating furnace in the course of thermal processing, particles expand in different ways: particles that have been contacting with the heating zone for a long period, i.e. those located in the flow periphery, may overexpand, particles that are located in the middle of the flow may expand incompletely and another part of the particles expands well. At exit from the active zone of the furnace, the ready product usually consists of a mixture of well-expanded, non-expanded and over-expanded particles. It is also worth noting that particles contacting with the walls of the active zone of the furnace stick to its walls screening the heating elements and reducing efficiency of thermal processing of the dust and air flow, which requires repairing of the furnace.

Irrespective of the furnace structure, the ready product usually consists of 10-30% of non-expanded and incompletely expanded particles, 50-70% of well-expanded particles and 10-30% of over-expanded particles. Using such mixture as a lightweight additive without additional classification, sedimentation and drying out does not lead to good results.

As seen from the application practice of furnaces for thermal processing of powder-like non-organic raw materials by expansion, the technical challenge is to provide uniformity of the process of non-organic raw material particles expansion, to provide uniformity of the obtained product in terms of density and particle size distribution, to reduce product losses due to it sticking to the walls of the active zone and, therefore, to increase operational reliability and the turnaround intervals.

The technical problem of the proposed method of thermal processing of powder-like non-organic particles and the appliance for its performance is increasing the yield and quality of the ready-to-use product with simultaneous increase of operational reliability of the furnace and turnaround intervals.

The set problem is solved by the claimed method of thermal processing of non-organic raw material particles which includes thermal processing of the starting material in the form of particles to be expanded in a vertical shaft-type furnace by feeding pre-heated starting material from below mixed with the flow of pre-heated air in the feeding unit with formation of a dust-air mixture which is fed under pressure to the active zone of the vertical furnace which is a vertically oriented cavity enclosed by the walls of at least one central tube with numerous heating zones heated by adjustable heating elements up to temperature leading to expansion of the non-organic particles in the active zone with further cooling of the flow of expanded particles leaving the active zone and their sedimentation in the expanded product accumulation zone distinctive by the fact that the walls of the central tube of the active zone are made of a current-conducting material and are electrically connected to an electrode which is supplied with an electric charge by connecting it to a power supply source; the raw material feeding unit is made of a current-conducting material and is electrically conected with an electrode which is supplied with an electric charge by connecting it to a power supply source; the electrodes of the active zone are connected to a power supply source with the same polarity and the expanded product accumulation unit is electrically connected with a collecting electrode which is supplied with an electric charge by connecting it to a power supply source with polarity opposite to polarity of the electrodes of the active zone and the raw material feeding unit.

For performance of the claimed method, an appliance for thermal processing of non-organic raw material particles is proposed which is a vertical shaft-type furnace with an active zone formed by an internal cavity of at least one central tube; the active zone contains a number of heating zones located along the axis of the central tube and fitted with adjustable heating elements installed on the outer side of the central tube; at entrance to the lower part of the active zone, the raw material feeding unit connected to the heater is installed, it mixes pre-heated starting material with pre-heated air forming a dust-air mixture forcedly fed to the active zone; at exit from the active zone in its upper part, an air-cooled expanded product accumulation is located and is distinctive by the fact that the walls of the central tube of the active zone are made of a current-conducting material and are electrically connected to an electrode connected to a power supply source; the raw material feeding unit is made of a current-conducting material and is electrically connected with an electrode connected to a power supply source; the electrode electrically connected to the walls of the central tube of the active zone and the electrode electrically connected to the raw material feeding unit are connected to the same pole of the power supply source; the expanded product accumulation unit is fitted with a collecting electrode which is connected to a power supply source with polarity opposite to polarity of the electrodes of the active zone and the raw material feeding unit.

Powder-like perlite is mainly used as a starting non-organic raw material. Other powder-like non-organic materials may be used, e.g. vermiculite or pitchstone or other non-organic material that may melt and expand under high temperature.

Pre-heating of the dust-air mixture to be fed to the active zone is performed in the raw material feeding unit up to temperature of 300-600°C. For formation of a dust-air mixture, air is also heated up to temperature of 300-600°C in the raw material feeding unit.

Initial size of the particles of non-organic starting material may be within the range of 1 to 2,000 µm, mainly 15-200 µm. The shape of the particles of non-organic raw material is mainly cubical but it also may be needle-shaped, flaky, round or any other. The particles of a non-organic starting material may be collected both without preliminary mechanical processing, e.g. in the form of a naturally-sourced sand and by means of mechanical processing (crushing, classification, dust-reduction) with extraction of a target fraction.

If perlite is used as a starting non-organic material, voltage supplied to the walls of the active zone and to the raw material feeding unit from the power supply source is mainly 2,000 to 7,000 V. With voltage below 2,000 V, perlite particles are charged insufficiently, which leads to possibility of sticking of perlite particles from the dust-air mixture to the metal walls of the active zone thus screening the walls of the active zone and reducing efficiency of thermal processing. With voltage above 7,000 V, electric breakdowns, sparks and other negative electrical phenomena preventing satisfactory process of expansion of starting non-organic material may be possible. Depending on the type of a starting non-organic material, optimal voltage values are selected to be supplied through respective electrodes to the walls of the active zone and to the starting non-organic material feeding unit.

Predominant pole for connection of the active zone electrodes and the raw material feeding unit is negative. Polarity for connection is selected based on dielectric properties of air, i.e. a medium which forms a dust-air mixture together with particles of non-organic starting material and undergoes thermal processing in the active zone. It is known in science that ignition voltage of a negative corona charge and breakdown voltage significantly differ in electronegative gases. This is used to advantage for wide-range adjustment and setting of voltage in industrial electrostatic precipitators (Fume Electrostatic Precipitators [Dymovyie filtry]. V.I. Levitov, I. K. Reshidov, V. M. Tkachenko et al.; Under the general editorship of V.I. Levitov. - Moscow: Energiya, 1980. - 448 p., illustrated).

It is also worth noting that the positive pole may be used for connection of the active zone electrodes and the raw material feeding unit to the power supply source. However, in this case, when using voltage within the range of 2,000-7,000 V, charging of the particles of non-organic starting material will be much worse and electric power consumed by the DC power supply source will be higher, which is economically unviable.

The electrode electrically connected to the walls of the central tube of the active zone is located on the outer side of the central tube, i.e. outside the active zone. The electrode electrically connected to the raw material feeding unit is installed on the outer side of its body. The collecting electrode is installed in the cavity of the expanded product accumulation unit.

The raw material feeding unit and the walls of the active zone are mostly connected to the same DC power supply source. Two DC power supply sources may also be used but in this case, it is necessary to provide the same voltage in the active zone and in the raw material feeding unit. In case of different values of electrical potential at the raw material feeding unit and on the walls of the active zone, the process of charging of the non-organic raw material particles may worsen which may also lead to deviation of the particles of the non-organic raw material towards the walls of the active zone with further sticking of the non-organic particles to the walls of the active zone. Different values of electrical potential on the walls of the active zone and at the raw material feeding unit reduce yield of the ready-to-use product and make it necessary to stop the furnace for its cleaning and repair.

Any power supply source commonly used in industry and creating DC voltage or combined voltage formed by overlapping of pulse voltage and DC voltage may be used as a power supply source, Power supply sources by Kraft Powercon or Southern Environmental are the most appropriate variants of the power supply source.

To provide efficient process of expansion of non-organic particles, the temperature inside the active zone is maintained within the range of 300 to 1,650 °C.

In the expanded product accumulation unit installed at the exit from the active zone, the flow of expanded particles is air-cooled and collected. The accumulation unit is fitted with the collecting electrode. Collection of the expanded product flow leaving the active zone is performed by means of an electric field formed in the expanded product accumulation unit by supplying voltage to the collecting electrode from the power supply source. The collecting electrode is connected with polarity opposite to polarity of the active zone electrodes and the raw material feeding unit. To provide different polarity, the collecting electrode is connected to the pole opposite to the connection pole of the active zone and the raw material feeding unit. For connection of the active zone electrodes, the raw material feeding unit and the expanded product accumulation unit, the same power supply source is used preferably.

As a result of application of the effect of the electric field formed by installing the respective electrodes in the raw material feeding unit, the furnace active zone and in the expanded product accumulation unit, the claimed method and the appliance for its performance allow to avoid or to significantly reduce sticking of the non-organic raw material particles to the inner walls by using the Coulomb (repulsive) forces of the non-organic particles charged similarly in the raw material feeding unit from the walls of the active zone, which provides high efficiency of the process and high yield of commercial product. Besides, the claimed method and the appliance for its performance provide uniform heating of the dust-air mixture in the active zone and uniform and intensive mixing of particles of the dust-air mixture in the active zone making the particles expand virtually uniformly across the cross-section of the dust-air flow and thus providing uniform expansion of the non-organic particles both in transversal and longitudinal directions with production of high-quality commercial product in the form of hollow lightweight granules. Efficient collection of the cooled flow of expanded particles by creating the opposite electric charge in the expanded product accumulation unit provides high yield of the commercial product.

The claimed appliance and the method performed by it are explained by but not limited to the following figures.

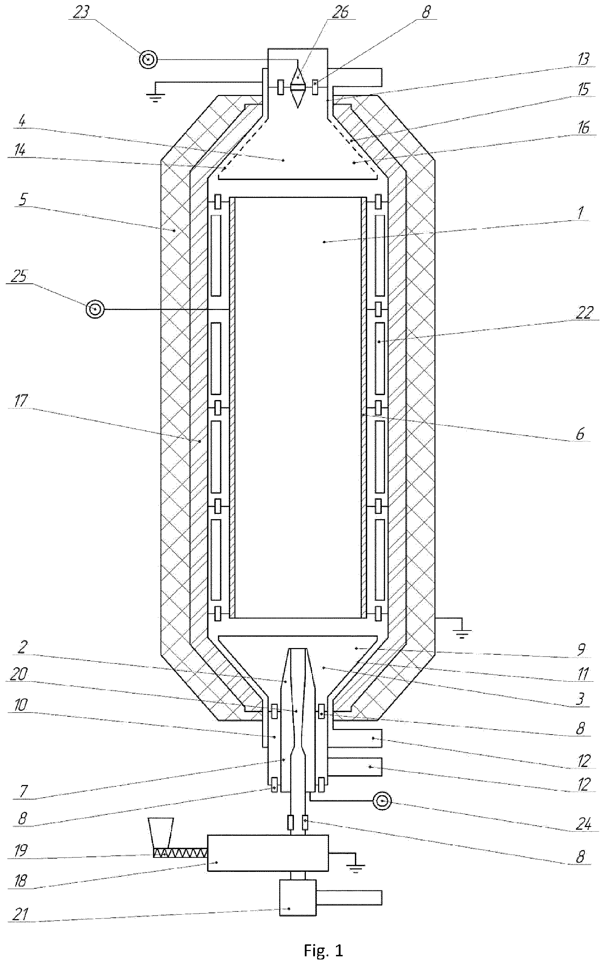

Fig. 1 demonstrates the diagram of the claimed appliance with the following depicted:
   1- active zone of the vertical shaft-type furnace;
   2- the raw material feeding unit installed inside the body with walls of a dielectric material and the cavity connected with the active zone 1;
   3- the air supply unit for mixing it with the raw material in the raw material feeding unit 2 and formation of the dust-air mixture;
   4- the expanded product accumulation unit which is a double-circuit system;
   5- the body of the active zone of the vertical shaft-type furnace;
   6- the central tube with walls made of a current-conducting material enclosing the active zone cavity;
   7- the cylindrical cavity of the raw material feeding unit 2 for mixing the dust-air mixture flow connected with the active zone 1;
   8- the electrical insulators of the raw material supply unit 2 and the expanded product accumulation unit 4;
   9- the cylindrical chamber of the air supply unit 3;
   10- u3he conical chamber of the air supply unit 3;
   11- the walls between the cylindrical chamber 9 and the conical chamber 10;
   12- the air inlet of the chambers 9, 10;
   13- the cylindrical metal partition wall forming the inner circuit of the expanded product accumulation unit 4;
   14- the conical metal partition wall forming the inner circuit of the expanded product accumulation unit 4;
   15- the outer circuit of the expanded product accumulation unit 4;
   16- the central channel 16 of the expanded product accumulation unit 4 for removal of the expanded product flow;
   17- the heat insulation elements attached to the frame of the furnace body 5;
   18- the heat exchanger for heating of the raw material in the raw material feeding unit 2;
   19- the spiral auger of the raw material feeding unit 2;
   20- the inner cavity in the form of a Venturi tube of the raw material feeding unit 2;
   21- the air heat exchanger of the raw material feeding unit 2;
   22- the heating elements of the active zone 1 installed between the walls of the central tube 6 and the heat insulation elements 17;
   23- the contact for connection to the DC power supply source;
   24- the electrode electrically connected to the raw material feeding unit 2 which is connected to the power supply source;
   25- the electrode electrically connected to the walls of the central tube 6 which is connected to the power supply source;
   26- the collecting electrode of the expanded product accumulation unit 4 connected to the power supply source and made in the form of a cylinder with cones in the upper and lower parts which provide the collecting electrode with a streamline shape.
Fig. 2 shows stages of expansion of the particles of a powder-like non-organic material where a) is a starting material particle (non-expanded), b) is a particle with forming bubbles, c) is a particle that has started expanding (incompletely expanded), d) is a well-expanded particle, i) is an over-expanded particle.
Fig. 3 shows the patterns of particle expansion degree distribution of an ordinary furnace with a heated central tube as the active zone without an electrode.
Fig. 4 presents the particle expansion degree distribution patterns for the claimed appliance.

The claimed appliance is a vertical shaft-type furnace with the body 5 in the inner cavity of which the central tube 6 is installed with its walls made of a current-conducting material and enclosing the cavity of the active zone 1. The central tube 6 may have both a round and a polygon cross-section including square, hexagon and octagon. The central tube may be made of any current-conducting material resistant to high temperatures (metal alloys, metal ceramics, similar composite materials), mostly of alloys of iron, chrome and nickel as well as of heat-proof alloys known in the industry. The central tube 6 is connected to the power supply source (not shown). The connection pole is negative. The body 5 consists of the load-bearing rigid frame to which the heat insulation elements 17, the current-conducting electrodes, the holders of the active zone 1, the electric insulators 8, the electromagnetic protective screens, the temperature sensors and all tubing required for operation of the furnace (not shown) are attached.

The furnace heat insulation may be made in multiple layers of lightweight chamotte, ordinary chamotte and heat-insulation materials based on silicon oxide, aluminium oxide, zirconium oxide and other oxides,

The heating elements 22 are installed between the central tube 6 and the heat-insulation elements 17. The heating elements 22 are mainly rod-shaped or have other shapes appropriate for heating of the active zone. The heating elements 22 are connected to the adjustable power supply source for setting of temperature within the range of 300 to 1,650 °C. Temperature is controlled by the temperature sensors installed near the heating elements 22 (not shown). The heating elements 22 are installed along the axis of the active zone 1 forming a number of adjustable heating zones, each zone is a heating belt on the outer side of the central tube 6.

The active zone 1 mainly consists of one central tube 6 but may consist of a larger number of them, up to 20 pcs. The height of the central tube 6 is 1,000 to 12,000 mm and its wall thickness is 5 to 100 mm.

The diameter of the active zone 1 may vary between 200 and 2,000 mm. The height of the active zone 1 may vary between 1,000 and 12,000 mm.

The lower part of the body 5 is connected with the raw material feeding unit 2 which is connected with the active zone 1.

The raw material feeding unit 2 has the cylindrical cavity 7 with diameter from 20 to 300 mm through which the raw material is supplied to the active zone 1 in the form of a dust-air mixture.

The inner cavity of the raw material feeding unit 2 is made in the form of a Venturi tube 20 with the diffuser oriented towards the active zone 1 of the furnace. The raw material feeding unit 2 is made of a current-conducting material, mainly of an iron, nickel and chrome alloy or of heat-proof alloys known in the industry and is connected to the DC power supply source (not shown). The connection pole is negative.

The raw material feeding unit 2 is installed on the electric insulators 8 preventing current from flowing to the other units of the furnace. Connection with the other parts of the furnace is performed also through the dielectric connectors (insulators).

The raw material feeding unit is fitted with the spiral auger 19 for transportation of powder-like non-organic raw material, is connected to the heat exchanger 18 for pre-heating of the powder-like non-organic raw material and is connected in sequence with the air heat exchanger 21.

The raw material feeding unit is connected with the air supply unit 3. The air supply unit 3 is a double-circuit system formed by the cylindrical chambers 9 and the conical chambers 10 separated by the partition walls 11. All circuits of the air supply unit 3 are used for air supply to the active zone 1. Each chamber 9, 10 has its own air inlet 12. The air supply unit may consist of several circuits the number of which may vary from 2 to 10 depending on the furnace diameter and raw material throughput.

The connection between the raw material feeding unit 2 and the air supply unit 3 makes it possible to mix pre-heated air and starting material and to form the dust-air mixture to be supplied to the active zone 1.

The raw material feeding unit 2 is connected to the DC power supply source (not shown) through the electrode 24 which is installed on the outer side of the raw material feeding unit 2 body. The connection pole is negative. The electrode 25 electrically connected with the central tube 6 is also connected to the same-sign pole. The power supply source voltage is maintained within the range of 2,000 to 7,000 V.

The central tube 6 of the active zone 1 and the raw material feeding unit 2 shall be connected to the same pole of the DC power supply source. In case these units are connected to different poles of the DC power supply unit, the material particles charged in the raw material feeding unit will move intensively towards the walls of the active zone under effect of the Coulomb force and sediment on the surface of the active zone tube leading to further scaling of the surface of the central tube 6 and stopping of the expansion process in the active zone of the furnace.

The upper part of the body 5 and the active zone 1 is connected with the expanded product accumulation unit 4 which is a double-circuit system consisting of two metal partition walls, cylindrical 13 and conical 14 connected to each other which form the inner circuit of the expanded product accumulation unit 4 which is a cavity the conical part of which is connected with the active zone 1. On the outer side, the partition walls 13, 14 form the outer circuit 15 through which air is supplied at preset flow for cooling of the flow of expanded particles leaving the active zone 1, and the central channel 16 is used for removal of the expanded product flow from the expanded product accumulation unit 4.

The conical part of the expanded product accumulation unit has numerous holes 1-5 mm in diameter in order to create a protective gas pad on its inner surface.

In the central channel 16 of the expanded product accumulation unit 4, the collecting electrode 26 is installed on the insulators 8. The electrode is made in the form of a cylinder with conical upper and lower parts forming a streamline shape. Thorugh the contact 23, the collecting electrode 26 is connected to the DC power supply source (not shown). The connection pole is positive.

The collecting electrode 26 is connected to the same DC power supply source the electrodes 24 and 25 are connected to which are electrically connected to the raw material feeding unit 2 and the walls of the central tube 6 respectively. The raw material feeding unit 2 and the central tube 6 of the active zone 1 are connected to one pole and the collecting electrode 26 is connected to the other pole of the same power supply source. The DC power supply source is grounded. The pole for connection of the collecting electrode 26 is grounded. This is necessary to reduce potential of the collecting electrode 26 down to zero so as the particles of the expanded product on its surface to lose the electric charge carried by them completely and to keep transporting safely uncharged.

The collecting electrode 26 may be made of any current-conducting material resistant to high temperatures (metal alloys, metal ceramics, similar composite materials), mostly of alloys of iron, chrome and nickel as well as of heat-proof alloys known in the industry.

The furnace body 5, the raw material feeding unit 2, the expanded product accumulation unit 4 are additionally grounded.

The claimed appliance performs the claimed method as follows.

The raw material in the form of a powder-like non-organic material pre-heated up to 300-600°C is fed to the raw material feeding unit 2.

The powder-like non-organic material may be both natural hydrated volcanic glass (perlite, pitchstone) and any other type of natural or synthetic raw material.

The size of the particles of non-organic powder-like material is within the range of 1 to 2,000 µm, mainly 15-200 µm. The shape of the particles of non-organic powder-like material is mainly cubical but it also may be needle-shaped, flaky, round or any other. The non-organic powder-like material may be collected both without processing, i.e. in the form of a naturally-sourced sand and by means of processing (crushing, classification, dust-reduction) with extraction of a target fraction.

The raw material is fed by the spiral auger 19 to the heat exchanger 18 where it is heated by the resistance elements using either electric current or combustible fuel. Air is also heated in the respective heat exchanger (not shown) by the resistance elements up to temperature of 300-600°C using either electric current or combustible fuel. Air is supplied through the air inlet 12 into the respective circuits of the air supply unit 3 formed by the cylindrical chamber 9 of the air supply unit 3 and the conical chamber 10 separated by the partition walls 11. Air flow in each circuit is estimated so as to provide the media motion mode close to piston mode in the active zone 1 and to prevent circulation of the media and formation of dead regions in the active zone 1.

Then the heated raw material is fed to the raw material feeding unit 2 where it is mixed with heated air and as a result the dust-air mixture forms which is fed to the active zone 1 of the furnace. The raw material is mixed with air by means of the Venturi tube 20 but any other appliance appropriate for formation of a dust-air mixture may be also used.

The heating elements 22 are connected to a 50 or 60 Hz 110-480 V electric current and the active zone 1 is heated up. The process temperature in the active zone may be 900 to 1,300°C at this moment.

From the raw material feeding unit 2, the dust-air mixture is fed to the active zone 1, in the lower belts of the active zone 1, the particles of the raw material are heated up to the softening temperature (700-1,100°C), as a result bubbles begin forming inside the particles and then they expand in the upper parts of the active zone 1.

While passing along the vertical axis of the active zone 1, the raw material particles expand up to the required expansion coefficient K and are then removed through the expanded product accumulation unit 4. Non-heated atmospheric air is continuously supplied to the outer circuit 15 of the expanded product accumulation unit 4 at preset flow. This air cools down the walls of the expanded product accumulation unit 4 and form a protective air pad on the edge and on the surface of the inner cavity of the conical part of the expanded product accumulation unit 4 connected with the active zone 1, which prevents sticking of particles to the expanded product accumulation unit 4.

The raw material particles are electrically charged in the raw material feeding unit 2 by means of the electrical potential supplied through the electrode 24. In the upgoing flow, the raw material particles carrying an electric charge cannot approach the walls of the central tube 6 of the active zone 1 since the electric tube 6 has the same electrical potential as the raw material feeding unit 2. The Coulomb force does not allow the raw material particles of the dust-air flow to approach the walls of the central tube 6 of the active zone 1 as well as to stick with each other.

After leaving the active zone 1 and reaching the expanded product accumulation unit 4, the expanded particles intensively go upwards towards the collecting electrode 26, the expanded particles touch the surface of the collecting electrode 26, settle on its surface, lose their electric charge and are then removed uncharged from the expanded product accumulation unit 4.

The claimed method provides intensive mixing of the expanded particles including intensive transversal mixing in the dust-air flow, i.e. the expanding particles are intensively mixed and expansion of particles across the cross-section of the dust-air flow is virtually uniform, which is shown in fig. 3 and fig. 4. In ordinary furnaces without using electric field for dust mixing of perlite, coefficients of longitudinal and transversal mixing are insignificant.

Fig. 3 shows the degree of particle expansion in an ordinary furnace without influence of electric field on the raw material supply unit and on the walls of the central heating tube forming the active zone where I is the cross-section near the feeding unit, II is the cross-section in the middle of the active zone and III is the cross-section near the expanded product accumulation unit. The nature of particle expansion in an ordinary furnace is characterised by non-uniform heating of particles across the dust-air mixture cross-section with the outer particles over-heated and the inner particles heated insufficiently for expansion. As a result, after leaving the active zone of the surface, there is a mixture of incompletely expanded (square particles), well-expanded (mid-size round particles) and over-expanded particles (large-size round particles).

Fig. 4 shows the degree of particle expansion in the claimed furnace where I is the cross-section near the feeding unit, II is the cross-section in the middle of the active zone and III is the cross-section near the product accumulation unit. The influence of the electric field on the raw material feeding unit 2 and on the walls of the central tube 6 forming the active zone 1 leads to formation of an electromagnetic field providing mixing sufficient for uniform expansion of particles both in transversal and longitudinal directions of the dust-air flow. Due to Coulomb forces, the formed electromagnetic field also prevents the particles from sticking to the walls of the central tube 6 of the active zone 1. Therefore, after leaving the active zone 1, expanded hollow particles with virtually uniform expansion coefficient and density are formed.

Examples of a specific performance of powder-like perlite expansion according to the claimed invention and the test cases are shown in table 1. The data obtained as a result of expansion of powder-like perlite using the claimed method and the claimed appliance (examples No. 1, 2 and 3 are the invention examples) is presented in the form of product expansion coefficient distribution. In the test cases No. 4, 5 and 6, expansion of identical powder-like perlite is performed in the same conditions but without influence of electric field on the raw material feeding unit, the walls of the central tube of the active zone and the expanded product accumulation unit.

To test the claimed method, d₁₀ 50 - d₉₀ 120 µm fraction of powder-like perlite from the Mukhor-Talinskoye deposir (Russia) was selected as the starting material. Voltage supplied to the heating elements 22 was 380 V, powerconsumption by the heaters was 24 kW, the height of the active zone 1 in the furnace was 3 m, the diameter of the active zone 1 was 400 mm, the electrical potential supplied to the raw material feeding unit 2 and to the walls of the central tube 6 of the active zone was 2,000 to 7,000 V, the connection pole of the electrodes 24 and 25 to the DC power supply source was negative. The pole for connection of the collecting electrode 26 is positive. All the electrodes are connected to the same DC power supply source.

During specific performance testing of the claimed structure appliance with supply of DC voltage, three expansion products were obtained. The proportions of the particles with the expansion coefficient from 2.0 to 3.0 was 16.7, 19.4 and 14.5%. The proportions of the particles with the expansion coefficient from 3.0 to 5.0 was 77.9, 76.4 and 79.7%. In general, the proportion of the particles with the most required industrial expansion coefficients from 2.0 to 4.0 was 96.4, 95.8 and 94.2%. Therefore, about 95% of the obtained expansion product may be used for production purposes.

The expansion product obtained using the claimed method is uniform both in terms of the expansion coefficient and in terms of particle size distribution. Particle size distribution of the expansion products obtained in the three examples of specific performance was virtually the same: d₁₀60 - d₉₀170 µm.

Supplying electrical potential below 2,000 V to the electrodes 24, 25 and 26 may lead to reduction of the expansion coefficient, strength of expanded particles and the degree of recovery of the expanded product. Supplying electrical potential above 7,000 V to the electrodes 24, 25 and 26 requires increased measures of electrical protection of equipment elements.

In the test cases No. 4, 5 and 6 which were performed in identical conditions in terms of characteristics of starting product, parameters of powder-like perlite mixing with air in the raw material feeding unit, air flow, temperature modes of starting material and air pre-heating, the active zone and voltage supplied to the heating elements for formation of the heating belts but without supplying DC voltage to the raw material feeding unit, to the active zone and to the expanded product accumulation unit, the expansion coefficient distribution pattern is significantly different. In particular, the number of particles with the expansion coefficient from 2.0 to 4.0 is 59.6, 50.8 and 45.1% respectively. These are much lower indicators of content of particles appropriate for industrial application than in the claimed method since almost a half of the obtained expanded product in the test cases are a material not appropriate for further application (incompletely expanded and over-expanded particles). Extraction of a target material out of such non-uniform mixture may require a sequence of additional process operations which will eventually lead to extreme rise of the cost of the commercial expanded product.

The expanded product obtained in the course of the test cases had worse particle size distribution: d₁₀55 - d₉₀210 µm. The wider range of the expanded product particle size distribution in the test cases No. 4, 5 and 6 is less appropriate for industrial application and sieving of the obtained expanded product with extraction of the same particle size with different expansion coefficients is impossible or too difficult.

Table 2 presents the data regarding yield of the expanded product in the invention examples No. 1, 2 and 3 and the test cases No. 4, 5 and 6. As seen from the data presented in table 2, average yield of the expanded product with use of the claimed appliance was 96.9% (loss of 3.1%). Average yield of the expanded product in the test cases was 93.1% (losses of 6.9%). The data shows that application of the claimed method and the appliance for its performance provides high yield of the expanded product appropriate for industrial application as compared with the test cases.

Strength of the expanded product (endured isostatic pressure) obtained in the invention examples No. 1, 2 and 3 is 23-25 MPa with apparent density of 815 kg/m³. Strength of the expanded product (endured isostatic pressure) obtained in the test cases No. 4, 5 and 6 is 7-12 MPa with apparent density of 820 kg/m³.

It is also worth noting that in the course of thermal processing of powder-like non-organic raw material, irreversible losses occur in the form of vapours of water and some other oxides from the starting material particles usually equal to 2.0 to 3.0% of the raw material weight. Losses do not sediment on the walls of the active zone and do not contaminate the process equipment of the furnace. As seen from the data shown in table 2, average losses in the invention examples are 3.1%, i.e. they are virtually the same as the losses not sticking to the walls of the active zone and not reducing efficiency of the furnace.

It is impossible to completely prevent sticking of any particles of the starting material from the dust-air mixture or from the expanded product while passing through the respective heating belts of the active zone. It is known that particles of the starting material and the expanded product irreversibly stick to the walls of the central tube of the active zone and cannot go back into the dust-air flow. The layer of particles stuck to the walls of the central tube of the active zone increases as long as the first kayer of particles sticks. Scaling of the internal walls of the central tube of the active zone with stuck particles reduces the operating area of the active zone as a result of which expansion of particles stops or slows down significantly.

The prior arrangements of vertical shaft-type furnaces similar to the claimed appliance, having the central tube of the active zone with adjustable heating but not creating the Coulomb force in the active zone in the course of expansion usually require stops for repair and cleaning at average each 10 days.

Thanks to significant reduction of possibility of particles sticking to the walls of the active zone, application of the claimed appliance allows to reduce average annual downtime of equipment due to repair and cleaning of the active zone from 36 to 8 times with the turnaround intervals increasing from 10 to 45 days. Also the claimed method and the appliance for its performance allow to obtain high-quality expanded product with narrow particle size distribution of d₁₀60 - d₉₀170 µm and almost the entire expanded product has the expansion coefficient of 2.0 to 4.0 and high strength of 23 to 25 MPa.

The obtained experimental data on application of the claimed appliance in pilot trial conditions proves efficiency of its use for expansion of powder-like natural or synthetic non-organic raw material including perlite with maximum possible yield of high-quality ready-to-use product in the form of hollow granules for their application as lightweight non-organic fine aggregates as well as with significant reduction of repair costs, which provides high process efficiency.

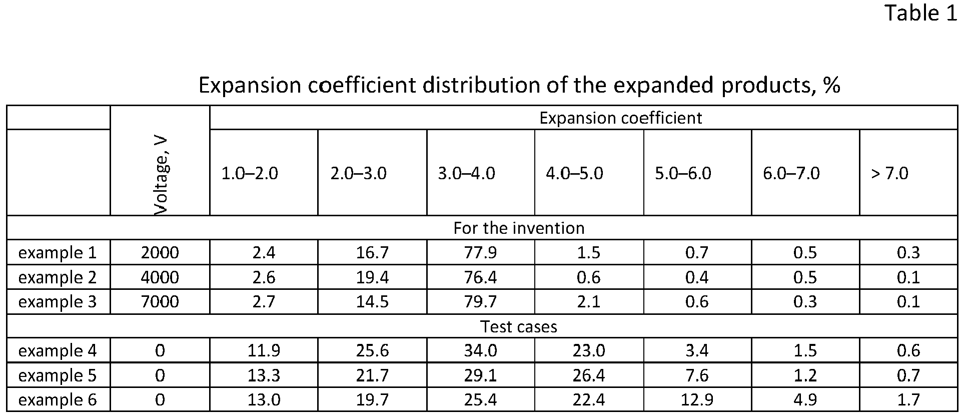

**Table 2**

| Ready product yield, % | |
|---|---|
| For the invention | |
| example 1 | 97.1 |
| example 2 | 96.7 |
| example 3 | 97.0 |

| Test cases | |
|---|---|
| example 1 | 93.3 |
| example 2 | 93.1 |
| example 3 | 92.9 |

## Claims

1. The method of thermal processing of non-organic raw material particles includes thermal processing of the starting material in the form of particles to be expanded in a vertical shaft-type furnace by feeding pre-heated starting material from below mixed with the flow of pre-heated air in the feeding unit with formation of a dust-air mixture which is fed under pressure to the active zone of the vertical furnace which is a vertically oriented cavity enclosed by the walls of at least one central tube with numerous heating zones heated by adjustable heating elements up to temperature leading to expansion of the non-organic particles in the active zone with further cooling of the flow of expanded particles leaving the active zone and their sedimentation in the expanded product accumulation zone distinctive by the fact that the walls of the central tube of the active zone are made of a current-conducting material and are electrically connected to an electrode which is supplied with an electric charge by connecting it to a power supply source; the raw material feeding unit is made of a current-conducting material and is electrically conected with an electrode which is supplied with an electric charge by connecting it to a power supply source; the electrodes of the active zone are connected to a power supply source with the same polarity and the expanded product accumulation unit is electrically connected with a collecting electrode which is supplied with an electric charge by connecting it to a power supply source with polarity opposite to polarity of the electrodes of the active zone and the raw material feeding unit.

2. The method of thermal processing of non-organic raw material as per par. 1 different by the fact that powder-like perlite is mainly taken as starting material in the form of particles to be expanded.

3. The method of thermal processing of non-organic raw material as per par. 1 different by the fact that the initial particle size of the starting material is within the range of 1 to 2,000 µm, mainly 15 to 200 µm.

4. The method of thermal processing of non-organic raw material as per par. 1 different by the fact that pre-heating of the starting material and air for the dust-air mixture is performed in the raw material feeding unit at temperature of up to 300-600°C.

5. The method of thermal processing of non-organic raw material as per par. 1 different by the fact that the value of voltage supplied to the walls of the central tube of the active zone and to the raw material feeding unit from the DC power supply source is mainly 2,000 to 7,000 V.

6. The method of thermal processing of non-organic raw material as per par. 1 different by the fact that the electrodes of the active zone and the raw material feeding unit are connected to the negative pole of the DC power supply source and the collecting electrode of the expanded product accumulation unit is connected to the positive pole of the DC power supply source.

7. The method of thermal processing of non-organic raw material as per par. 1 different by the fact that the temperature in the active zone is maintained within the range of 300 to 1,650°C.

8. An appliance for thermal processing of non-organic raw material particles is a vertical shaft-type furnace with an active zone formed by an internal cavity of at least one central tube; the active zone contains a number of heating zones located along the axis of the central tube and fitted with adjustable heating elements installed on the outer side of the central tube; at entrance to the lower part of the active zone, the raw material feeding unit connected to the heater is installed, it mixes pre-heated starting material with pre-heated air forming a dust-air mixture forcedly fed to the active zone; at exit from the active zone in its upper part, an air-cooled expanded product accumulation is located and is distinctive by the fact that the walls of the central tube of the active zone are made of a current-conducting material and are electrically connected to an electrode connected to a power supply source; the raw material feeding unit is made of a current-conducting material and is electrically connected with an electrode connected to a power supply source; the electrode electrically connected to the walls of the central tube of the active zone and the electrode of the raw material feeding unit are connected to the same pole of the power supply source; the expanded product accumulation unit is fitted with a collecting electrode which is connected to a power supply source with polarity opposite to polarity of the electrodes of the active zone and the raw material feeding unit.

9. An appliance for thermal processing of non-organic raw material particles as per par. 1 different by the fact that the electrodes of the active zone and of the raw material feeding unit are connected to the negative pole of the DC power supply source.

10. An appliance for thermal processing of non-organic raw material particles as per par. 1 different by the fact that the collecting electrode of the expanded product accumulation unit is connected to the positive pole of the DC power supply source.

11. An appliance for thermal processing of non-organic raw material particles as per par. 1 different by the fact that the current-conducting material is a metal alloy, mainly alloys of iron, chrome and nickel, or metal ceramics.

12. An appliance for thermal processing of non-organic raw material particles as per par. 1 different by the fact that the electrode electrically connected to the walls of the active zone is installed on the outer side of the walls of the central tube.

13. An appliance for thermal processing of non-organic raw material particles as per par. 1 different by the fact that the electrode electrically connected with the raw material feeding unit is installed on the outer side of its body.

14. An appliance for thermal processing of non-organic raw material particles as per par. 1 different by the fact that the collecting electrode is installed in the central channel of the expanded product accumulation unit and is fitted with insulators.

15. An appliance for thermal processing of non-organic raw material particles as per par. 1 different by the fact that the active zone may be formed by two or more central tubes.
